# EUROPÄISCHE PATENTANMELDUNG

(11) **EP 2 249 447 A2**
(43) Veröffentlichungstag der Anmeldung: **10.11.2010**
(21) Anmeldenummer: 10157080.2
(22) Anmeldetag: 19.03.2010
(51) Int. Cl.: H02G 3/06

(54) **Verbindungsanordnung**

(30) Priorität: 07.05.2009 DE 202009006602 U
(71) Anmelder: Kunststoffwerke-GGK GmbH & Co.KG, 35753 Greifenstein (DE)
(72) Erfinder: Müller, Eckhard, 35781 Weiburg an der Lahn (DE)
(74) Vertreter: Tappe, Hartmut

(57) **Zusammenfassung**

1. Die Erfindung betrifft eine Verbindungsanordnung (26) zur Verbindung von Kabeltragelementen, insbesondere Kabelpritschen, Kabelwannen, Kabelkanäle oder dergleichen, mit zumindest zwei Kabeltragelementen (10, 11), wobei die Kabeltragelemente in einem Verbindungsabschnitt jeweils komplementäre Verbindungsbereiche aufwciscn, die überlappend anordbar sind, wobei ein erster Verbindungsbereich zumindest ein Befestigungsmittel zur Befestigung des ersten Verbindungsbereichs an einem zweiten Verbindungsbereich aufweist, wobei der zweite Verbindungsbereich zumindest eine Ausnehmung aufweist, die so am zweiten Verbindungsbereich angeordnet ist, dass das Befestigungsmittel durch eine Relativbewegung der Kabeltragelemente quer und längs zu einer Längsachse eines Kabeltragelements in die Ausnehmung formschlüssig einsetzbar ist.

## Beschreibung

Die Erfindung betrifft eine Verbindungsanordnung zur Verbindung von Kabeltragelementen, insbesondere Kabelpritschen, Kabelwannen, Kabelkanäle oder dergleichen, mit zumindest zwei Kabeltragelementen, wobei die Kabeltragelemente in einem Verbindungsabschnitt jeweils komplementäre Verbindungsbereiche aufweisen, die überlappend anordbar sind, wobei ein erster Verbindungsbereich zumindest ein Befestigungsmittel zur Befestigung des ersten Verbindungsbereichs an einem zweiten Verbindungsbereich aufweist.

Verbindungsanordnungen der vorgenannten Art werden insbesondere zur Verbindung von Kabelpritschen, Kabelrinnen, Kabekanälen oder dergleichen zu einem Kabeltragsystem, wie es beispielsweise für die Verlegung großer Kabelmengen in Gebäuden zum Einsatz kommen kann, verwendet. Die das Kabeltragsystem bildenden Kabeltragelemente werden an einer geeigneten Tragkonstruktion an einer Wand, einem Boden oder einer Decke montiert und mit den zu verlegenden Kabeln bestückt. Die Kabeltragelemente bestehen regelmäßig aus Metall oder Kunststoff und sind mit vorgefertigten Durchgangsöffnungen in Art von Schlitzen oder Bohrungen versehen, die im Wesentlichen als eine Montagehilfe oder zur Abzweigung von Kabeln dienen. Zur Ausbildung eines Kabeltragsystems werden die Kabeltragelemente an ihren Längsenden mittels geeigneter Befestigungsmittel verbunden Als Befestigungsmittel kommen beispielsweise Kupplungsstücke, Schrauben, Verbindungslaschen oder dergleichen zum Einsatz. Da die Befestigungsmittel als von den Kabeltragelementen separates Zubehör mitgeführt werden müssen, ist eine Montage und Handhabung der Kabeltragelemente häufig schwierig, da die montierende Person einerseits zwei Kabeltragelemente in eine zur Montage der Kabeltragelemente vorgesehene Position bringen und andererseits gleichzeitig die jeweiligen Befestigungsmittel mit den Kabeltragelementen in Eingriff bringen muss. Es ist daher bekannt Befestigungsmittel zu verwenden, die bereits an einem Kabeltragelement angeordnet sind, so dass bei einem Zusammenfügen der Kabeltragelemente die Kabeltragelemente miteinander verrasten können. Die alleinige Ausbildung einer Rastverbindung ist jedoch nicht zufrieden stellend, da diese gegenüber beispielsweise einer Schraubverbindung nicht ausreichend stabil und sicher gegenüber unbeabsichtigtem Lösen ist. Auch müssen die dafür vorgesehnen Befestigungselemente eigens für die jeweiligen Kabeltragelemente bzw. für die Art der Verbindung ausgebildet werden, das heißt, es kann nicht auf normierte und somit in großer Stückzahl kostengünstig erhältliche Befestigungselemente zurückgegriffen werden.

Der vorliegenden Erfindung liegt daher die Aufgabe zugrunde, eine Verbindungsanordnung vorzuschlagen, die eine einfache Montage von Kabeltragelementen ohne eigens dafür ausgebildete Befestigungsmittel ermöglicht, wobei die Verbindungsanordnung dennoch stabil ausbildbar sein soll.

Diese Aufgabe wird durch eine Verbindungsanordnung mit den Merkmalen des Anspruchs 1 gelöst.

Zumindest zwei Kabeltragelemente der erfindungsgemäßen Verbindungsanordnung zur Verbindung von Kabeltragelementen weisen in einem Verbindungsabschnitt jeweils komplementäre Verbindungsbereiche auf, die überlappend anordbar sind, wobei ein erster Verbindungsbereich zumindest ein Befestigungsmittel zur Befestigung des ersten Verbindungsbereichs an einem zweiten Verbindungsbereich aufweist, wobei der zweite Verbindungsbereich zumindest eine Ausnehmung aufweist, die so am zweiten Verbindungsbereich angeordnet ist, dass das Befestigungsmittel durch eine Relativbewegung der Kabeltragelemente quer und längs zu einer Längsachse eines Kabeltragelements in die Ausnehmung formschlüssig einsetzbar ist.

Demnach ist das Befestigungsmittel bereits an einem Kabeltragelement vormontiert, so dass es für eine Montage lediglich eines Zusammenfügens der Kabeltragelemente durch die vorgenannte Relativbewegung bedarf. Da die Verbindungsbereiche der Kabeltragelemente komplementär überlappend ausgebildet sind, werden die Kabeltragelemente bereits durch das Zusammenführen in ihrer vorgesehenen Montageposition weitestgehend fixiert. Die durch die Relativbewegung beider Kabeltragelemente definierte Form der Ausnehmung stellt sicher, dass die Kabeltragelemente nicht ohne weiters, beispielsweise durch eine Bewegung relativ zur Längsachse, unbeabsichtigt auseinander gezogen werden können. Die so in ihre Montageposition verbrachten Kabeltragelemente sind nun mittels des Befestigungsmittels hinreichend sicher montierbar, ohne dass es dabei einer besonderen, manuellen Lagefixierung der Kabeltragelemente relativ zueinander bedürfte. Die Verbindungsanordnung sichert so gegen unbeabsichtigtes Lösen und gestattet auf einfache, selbsterklärende Weise ein beabsichtigtes Lösen der Verbindung, wobei kein Spezialwerkzeug für die De-/Montage benötigt wird.

Die Verbindungsbereiche können so ausgebildet sein, dass der zweite Verbindungsbereich den ersten Verbindungsbereich an seiner, einer Tragaufnahme abgewandten Außenfläche umgreift. Der erste Verbindungsbereich kann dann in Übereinstimmung mit einem Querschnittsprofil des betreffenden Kabeltragelements ausgebildet sein, so dass es lediglich einer vom Querschnittsprofil abweichenden Ausbildung des zweiten Verbindungsbereichs bedarf. Die für die Verbindungsanordnung verwendeten Kabeltragelemente können dann besonders kostengünstig hergestellt werden.

Als vorteilhaft erweist es sich, wenn die am zweiten Verbindungsbereich angeordnete Ausnehmung L-förmig ist. Hierdurch kann ein unbeabsichtigtes Auseinanderziehen der Kabeltragelemente in eine Richtung wirkungsvoll vermieden werden, da die L-förmige Ausnehmung für eine einseitig gerichtete Relativbewegung einen Anschlag für das Befestigungsmittel ausbildet. Die Verbindungsanordnung kann so weitestgehend die unkontrollierte Lösung der Kabeltragelemente sowohl in vertikaler als auch horizontaler Richtung verhindern.

Auch ist es besonders vorteilhaft, wenn ein Öffnungsbereich der Ausnehmung quer zu der Längsachse des Kabeltragelements ausgebildet ist. Die Kabeltragelemente können dann bei einer Montage so ineinander gefügt werden, dass das Befestigungsmittel von oberhalb oder unterhalb der Ausnehmung in diese eingesetzt wird. Demnach kann ein Kabeltragelemente mit dem Befestigungselement bzw. ein Kabeltragelement mit der Ausnehmung in ein bereits montiertes Kabeltragelement mit einem komplementären Verbindungsbereich einfach eingehängt werden bevor eine Relativbewegung entlang der Längsachse der Kabeltragelemente erfolgt. Auf eine weitere, manuelle Ausrichtung bzw. Fixierung der Kabeltragelemente relativ zueinander kann somit verzichtet werden, was eine Montage weiter vereinfacht.

Ein Zusammenfügen der Kabeltragelemente wird weiter vereinfacht, wenn ein Öffnungsbereich der Ausnehmung trichterförmig ausgebildet ist. Die Kabeltragelemente müssen dann zu Beginn der Montage nicht mehr exakt relativ zueinander ausgerichtet bzw. positioniert sein, da der trichterförmige Öffnungsbereich bei einem Zusammenführen Lageabweichungen korrigieren kann.

Weist das Kabeltragelement einen U-förmigen Profilquerschnitt auf, kann die Verbindungsanordnung besonders einfach hergestellt werden.

In einer besonders vorteilhaften Ausführungsform der Verbindungsanordnung können das Befestigungsmittel und die Ausnehmung an Seitenwandungen der jeweiligen U-förmigen Profilquerschnitte vorgesehen sein. Diese Anordnung kann eine Montage weiter vereinfachen, insbesondere da die Seitenwandungen besonders gut für eine montierende Person zugänglich sind. Auch wird eine Verlegung der Kabel auf einer Bodenwandung der Profilquerschnitte dann nicht durch die Art der Befestigung beeinflusst.

Eine besonders sichere Verbindung der Kabeltragelemente kann ermöglicht werden, wenn die Verbindungsbereiche so ausgebildet sind, dass eine kraftschlüssige Verbindung ausbildbar ist. Eine zusätzlich zu der formschlüssigen Verbindung ausgebildete kraftschlüssige Verbindung verhindert wirkungsvoll jede Relativbewegung, die im Rahmen eines Eingriffsspiels der Verbindungsbereiche bei der formschlüssigen Verbindung möglich sein könnte. Beispielsweise könnten die Verbindungsbereiche dann so ausgebildet sein, dass eine Verbindung in Art einer von den Verbindungsbereichen gebildeten Presspassung ausbildbar ist.

In einer weiteren Ausführungsform einer kraftschlüssigen Verbindung kann das Befestigungsmittel eine Schraube sein. Die Schraube kann dann einerseits zur Herstellung eines Formschlusses mit der Ausnehmung und andererseits zur kraftschlüssigen Befestigung der Verbindungsbereiche dienen. Die Schraube kann beispielsweise in ein in einem Verbindungsbereich ausgebildetes Gewinde eingesetzt sein oder als Blechschraube ausgebildet sein, die in eine einfache Durchgangsöffnung eines Verbindungsbereichs teilweise eingeschraubt ist. Im Rahmen eines maschinellen Produktionsprozesses kann weiter eine Platzierung von Schrauben, Muttern, Setzmuttern und/oder eine Erzeugung eines Gewindedurchzuges mit geformtem Gewinde vollzogen werden. Alleine eine Verwendung einer Schraube als ein Befestigungsmittel kann eine erhebliche Kostenreduzierung zur Herstellung der Verbindungsanordnung bewirken, da Schrauben gegenüber speziell für eine Verbindungsanordnung hergestellten Befestigungsmitteln als Normteile in großer Stückzahl kostengünstig erhältlich sind. Auch sind die selbsterklärende Handhabung von Normteilen sowie die Vermeidung von teuren und oftmals bei Bedarf nicht verfügbaren Spezialwerkzeugs von Bedeutung.

Besonders vorteilhaft ist es, wenn als ein weiteres Befestigungsmittel eine Mutter vorgesehen ist. Durch die Verwendung einer Mutter ist eine hohe Flächenpressung zwischen den Verbindungsbereichen erzielbar, was eine hohe Befestigungskraft zur Folge hat.

Die Verbindungsanordnung kann noch weiter dadurch verbessert werden, dass ein Verbindungsbereich zumindest ein verformbares Befestigungsmittel ausbildet. Das verformbare Befestigungsmittel kann nach einem Zusammenfügen der Verbindungsbereiche so verformt werden, dass eine weitere formschlüssige Verbindung zwischen den Verbindungsbereichen gebildet wird. Dadurch kann ein unbeabsichtigtes Lösen der Verbindungsanordnung vermieden werden, da das verformbare Befestigungsmittel dann als eine Sicherung dient.

Wenn ein Verbindungsbereich zumindest eine weitere Ausnehmung ausbildet, in die das verformbare Befestigungsmittel eingreifen kann, ist sichergestellt, dass die Verbindungsbereiche in ihrer für eine Verbindung vorgesehene Relativposition positioniert sind.

Das verformbare Befestigungsmittel kann besonders einfach hergestellt werden, wenn das verformbare Befestigungsmittel eine Lasche ist.

Das verformbare Befestigungsmittel und die weitere Ausnehmung können jeweils in einer Bodenwandung der Kabeltragelemente vorgesehen sein.

Dies ist insbesondere von Vorteil, da die Bodenwandung leicht zugänglich ist.

Die Verbindungsanordnung kann sicher ausgebildet werden, wenn je Verbindungsbereich zumindest zwei Befestigungsmittel oder Ausnehmungen vorgesehen sind. Die Befestigungsmittel oder Ausnehmungen können symmetrisch zu den Längsachsen der Kabeltragelemente an den Kabeltragelementen angeordnet sein, so dass eine einfache Handhabung sowie eine gleichmäßige Verteilung von auf die Verbindungsanordnung einwirkenden Kräften erzielbar sind.

Zur Herstellung von Kabeltragsystemen ist es vorteilhaft, wenn an einem Kabeltragelement der erste und der zweite Verbindungsbereich ausgebildet sind. Ein Kabeltragsystem kann dann aus einer Mehrzahl von gleichartigen Kabeltragelementen ausgebildet werden.

Im Folgenden wird die Erfindung unter Bezugnahme auf die beigefügten Zeichnungen näher erläutert.

Es zeigen:

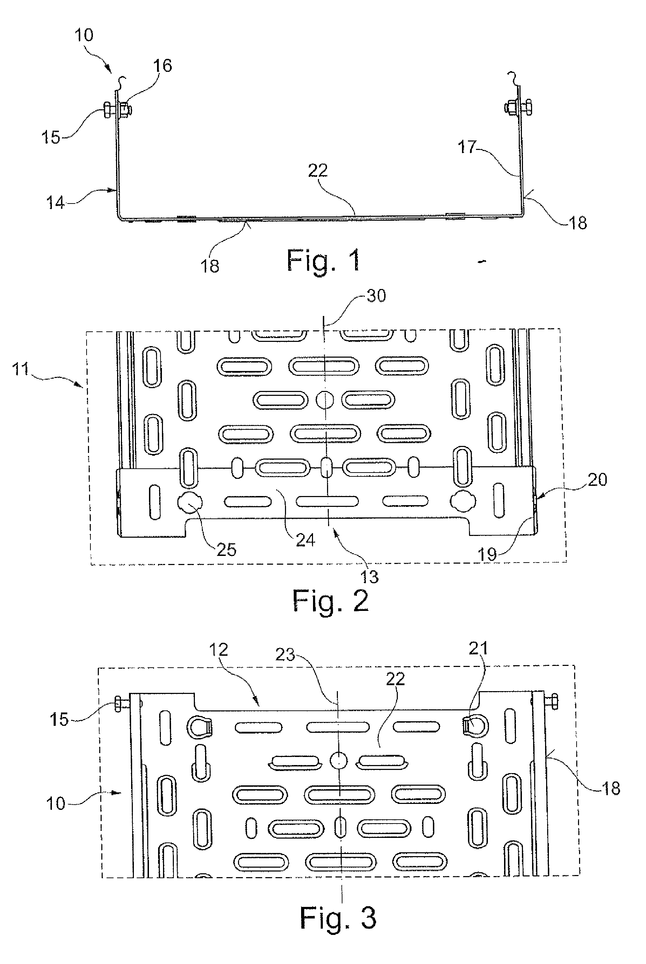

- **Fig. 1**: eine Vorderansicht eines ersten Kabeltragelements;
- **Fig. 2**: eine abschnittsweise Draufsicht eines zweiten Kabeltragelements;
- **Fig. 3**: eine abschnittsweise Draufsicht des ersten Kabeltragelements;
- **Fig. 4**: das erste und das zweite Kabeltragelement in einer Teilseitenansicht in einer ersten Montagekonfiguration;
- **Fig. 5**: das erste und das zweite Kabeltragelement in einer Teilseitenansicht in einer zweiten Montagekonfiguration;
- **Fig. 6**: das erste und das zweite Kabeltragelement in einer Teilseitenansicht in einer dritten Montagekonfiguration;
- **Fig. 7**: eine perspektivische Teilansicht des ersten und des zweiten Kabeltragelements in einer vierten Montagekonfiguration.

Die **Fig**. **1** bis **3** zeigen ein erstes Kabeltragelement 10 in einem Profilquerschnitt sowie ein zweites Kabeltragelement 11 und das erste Kabeltragelement 10 abschnittsweise dargestellt in einer Draufsicht. Das erste Kabeltragelement 10 weist einen ersten Verbindungsbereich 12 auf, der komplementär zu einem zweiten Verbindungsbereich 13 des zweiten Kabeltragelements 11 ausgebildet ist. Der erste Verbindungsbereich 12 entspricht einem Profilquerschnitt 14 der Kabeltragelemente 10 und 11 und weist zwei als Schrauben 15 mit Muttern 16 ausgebildete Befestigungsmittel auf. Die Muttern 16 sind an Seitenwandungen 17 des ersten Kabeltragelements 10 bzw. des ersten Verbindungsbereichs 12 so angeordnet, dass die Schrauben 15 wie dargestellt vormontiert werden können. Der zweite Verbindungsbereich 13 ist so ausgebildet, dass er den ersten Verbindungsbereich 12 an einer Außenfläche 18 umgreifen kann. Weiter sind in Seitenwandungen 19 des zweiten Verbindungsbereichs 13 Ausnehmungen 20 vorgesehen, in die die Schrauben 15 einsetzbar sind. Der zweite Verbindungsbereich 13 verfügt weiter über als Laschen 21 ausgebildete verformbare Befestigungsmittel in einer Bodenwandung 22. Die Laschen 21 sind längs zu einer Längsachse 23 des ersten Kabeltragelements 10 verformbar. In einer Bodenwandung 24 des zweiten Kabeltragelements 11 bzw. des zweiten Verbindungsbereichs 13 sind Ausnehmungen 25 ausgebildet in die die Laschen 21 durch Verformung einsetzbar sind. In einer hier noch nicht gezeigten Verbindungsanordnung können die derart verformten Laschen ein Auseinanderziehen der Verbindungsanordnung verhindern.

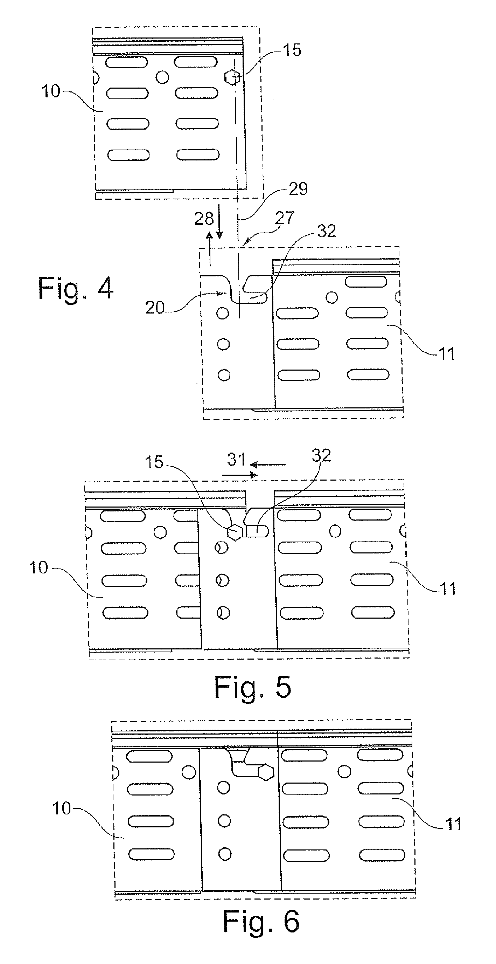

Eine Zusammenschau der **Fig. 4** bis **7** zeigt eine Montage des ersten Kabeltragelements 10 mit dem zweiten Kabeltragelement 11 zu einer Verbindungsanordnung 26. Das erste Kabeltragelement 10 wird, wie in **Fig. 4** dargestellt, relativ zum zweiten Kabeltragelement 11 so angeordnet, dass die Schraube 15 mit einer trichterförmigen Öffnung 27 der L-förmigen Ausnehmung 20 fluchtet. Danach werden die Kabeltragelemente 10 bzw. 11 entsprechend der Pfeile 28 längs der Achse 29 und quer zu den Längsachsen 23 und 30 der Kabeltragelemente 10 bzw. 11 bewegt, so dass, wie in **Fig. 5** dargestellt, die Schraube 15 in die Ausnehmung 20 eingesetzt wird. Die jeweiligen Längsachsen 23 und 30 der Kabeltragelemente 10 bzw. 11 fluchten nun, so dass entsprechend der Darstellung in **Fig. 6** die Kabeltragelemente 10 und 11 bzw. deren Verbindungsbereiche 12 bzw. 13 entsprechend der Pfeile 31 ineinander geschoben werden. Die Schraube 15 wird dann dementsprechend in einer Längsnut 32 der Ausnehmung 20 verschoben. Demnach sind die Kabeltragelemente 10 und 11 so formschlüssig verbunden, dass sie durch eine einseitig gerichtete Bewegung in Richtung der Pfeile 28 oder 31 nicht getrennt werden können.

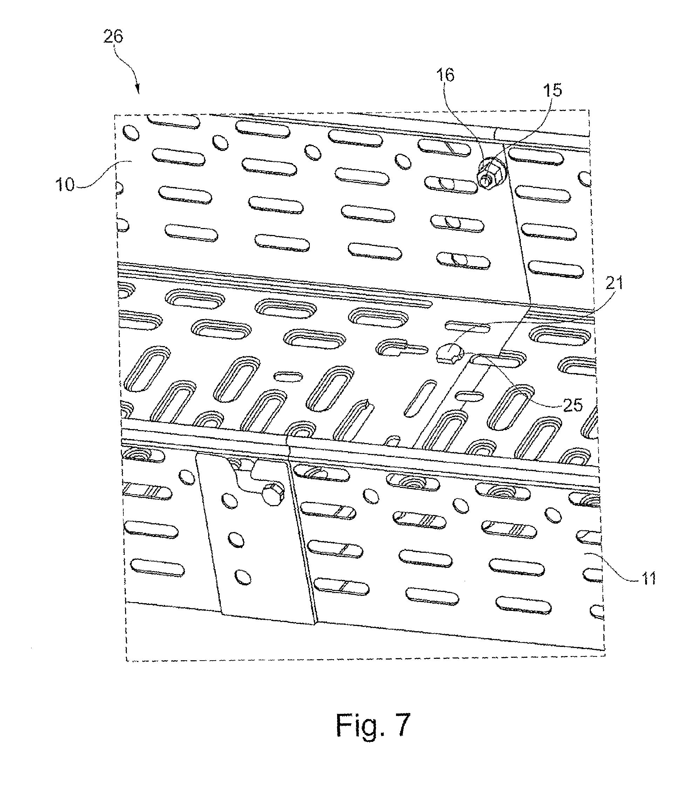

Wie aus der perspektivischen Darstellung in **Fig. 7** ersichtlich, sind die Schrauben 15 mit den Muttern 16 so verbunden, dass eine kraftschlüssige Verbindung zwischen dem ersten Verbindungsbereich 12 und dem zweiten Verbindungsbereich 13 ausgebildet wird. Die Laschen 21 befinden sich in der hier dargestellten Verbindungsanordnung 26 in einer Überdeckungslage zu den Ausnehmungen 25, so dass ein Umbiegen der Laschen 21 in die Ausnehmungen 25 ermöglicht wird. Für den Fall, dass sich die kraftschlüssige Verbindung lösen sollte, ermöglicht insbesondere die L-förmige Ausbildung der Ausnehmung 20 eine Sicherung der Verbindungsanordnung 26, da zumindest eine trennende Bewegung entlang der Längsachsen 23 und 30 der Kabeltragelemente 10 bzw. 11 und entlang der Achse 29 quer zu den Längsachsen 23 und 30 notwendig ist um die Kabeltragelemente 10 und 11 vollständig zu trennen.

## Patentansprüche

1. Verbindungsanordnung (26) zur Verbindung von Kabeltragelementen, insbesondere Kabelpritschen, Kabelwannen, Kabelkanäle oder dergleichen, mit zumindest zwei Kabeltragelementen (10, 11), wobei die Kabeltragelemente in einem Verbindungsabschnitt jeweils komplementäre Verbindungsbereiche aufweisen, die überlappend anordbar sind, wobei ein erster Verbindungsbereich (12) zumindest ein Befestigungsmittel zur Befestigung des ersten Verbindungsbereichs an einem zweiten Verbindungsbereich (13) aufweist,
**dadurch gekennzeichnet,**
**dass** der zweite Verbindungsbereich zumindest eine Ausnehmung (20) aufweist, die so am zweiten Verbindungsbereich angeordnet ist, dass das Befestigungsmittel durch eine Relativbewegung der Kabeltragelemente quer und längs zu einer Längsachse (23, 30) eines Kabeltragelements in die Ausnehmung formschlüssig einsetzbar ist.

2. Verbindungsanordnung nach Anspruch 1,
**dadurch gekennzeichnet,**
**dass** die Verbindungsbereiche so ausgebildet sind, dass der zweite Verbindungsbereich (13) den ersten Verbindungsbereich (12) an seiner, einer Tragaufnahme abgewandten Außenfläche (18) umgreift.

3. Verbindungsanordnung nach Anspruch 1 oder 2,
**dadurch gekennzeichnet,**
**dass** die Ausnehmung (20) L-förmig ist.

4. Verbindungsanordnung nach einem der vorangehenden Ansprüche,
**dadurch gekennzeichnet,**
**dass** ein Öffnungsbereich (27) der Ausnehmung (20) quer zu der Längsachse (30) des Kabeltragelements (11) ausgebildet ist.

5. Verbindungsanordnung nach einem der vorangehenden Ansprüche,
**dadurch gekennzeichnet,**
**dass** ein Öffnungsbereich (27) der Ausnehmung (20) trichterförmig ausgebildet ist.

6. Verbindungsanordnung nach einem der vorangehenden Ansprüche,
**dadurch gekennzeichnet,**
**dass** das Kabeltragelement (10, 11) einen U-förmigen Profilquerschnitt (14) aufweist.

7. Verbindungsanordnung nach Anspruch 6,
**dadurch gekennzeichnet,**
**dass** das Befestigungsmittel und die Ausnehmung (20) an Seitenwandungen (19) der jeweiligen U-förmigen Profilquerschnitte (14) vorgesehen sind.

8. Verbindungsanordnung nach einem der vorangehenden Ansprüche,
**dadurch gekennzeichnet,**
**dass** die Verbindungsbereiche (12, 13) so ausgebildet sind, dass eine kraftschlüssige Verbindung ausbildbar ist.

9. Verbindungsanordnung nach Anspruch 8,
**dadurch gekennzeichnet,**
**dass** Befestigungsmittel eine Schraube (15) ist.

10. Verbindungsanordnung nach Anspruch 9,
**dadurch gekennzeichnet,**
**dass** als ein weiteres Befestigungsmittel eine Mutter (16) vorgesehen ist.

11. Verbindungsanordnung nach einem der vorangehenden Ansprüche,
**dadurch gekennzeichnet,**
**dass** ein Verbindungsbereich (12) zumindest ein verformbares Befestigungsmittel ausbildet.

12. Verbindungsanordnung nach Anspruch 11,
**dadurch gekennzeichnet,**
**dass** ein Verbindungsbereich (13) zumindest eine weitere Ausnehmung (25) ausbildet, in die das verformbares Befestigungsmittel eingreifen kann.

13. Verbindungsanordnung nach Anspruch 11 oder 12,
**dadurch gekennzeichnet,**
**dass** das verformbares Befestigungsmittel eine Lasche (21) ist.

14. Verbindungsanordnung nach einem der Ansprüche 11 bis 13,
**dadurch gekennzeichnet,**
**dass** verformbare Befestigungsmittel und die weitere Ausnehmung (25) jeweils in einer Bodenwandung (22, 24) der Kabeltragelemente (10, 11) vorgesehen sind.

15. Verbindungsanordnung nach einem der vorangehenden Ansprüche,
**dadurch gekennzeichnet,**
**dass** je Verbindungsbereich (12, 13) zumindest zwei Befestigungsmittel oder Ausnehmungen (19; 25) vorgesehen sind.

16. Verbindungsanordnung nach einem der vorangehenden Ansprüche,
**dadurch gekennzeichnet,**
**dass** an einem Kabeltragelement (10, 11) der erste und der zweite Verbindungsbereich (12, 13) ausgebildet sind.
